# EUROPÄISCHE PATENTSCHRIFT

(11) **EP 3 646 055 B1**
(45) Veröffentlichungstag und Bekanntmachung des Hinweises auf die Patenterteilung: **18.06.2025**
(21) Anmeldenummer: 18735254.7
(22) Anmeldetag: 27.06.2018
(51) Int. Cl.: G01S 13/93, G01S 13/42, H01Q 21/20, H01Q 21/06, G01S 13/90

(54) **NAHFELD-RADAREINRICHTUNG, LAND-, LUFT- ODER WASSER-FAHRZEUG, VERWENDUNG EINER RADAREINRICHTUNG, VERFAHREN ZUM BETRIEB EINER RADAREINRICHTUNG SOWIE COMPUTERPROGRAMM**
NEAR-FIELD RADAR DEVICE, LAND VEHICLE, AIRCRAFT OR WATERCRAFT, USE OF A RADAR DEVICE, METHOD FOR OPERATING A RADAR DEVICE, AND COMPUTER PROGRAM
APPAREIL RADAR DE CHAMP PROCHE, VÉHICULE, AVION OU BATEAU, UTILISATION D'UN APPAREIL RADAR, PROCÉDÉ POUR FAIRE FONCTIONNER UN APPAREIL RADAR AINSI QUE PROGRAMME INFORMATIQUE

(30) Priorität: 27.06.2017 DE 102017114223
(43) Veröffentlichungstag der Anmeldung: 06.05.2020
(73) Patentinhaber: Gottfried Wilhelm Leibniz Universität Hannover, 30167 Hannover (DE)
(72) Erfinder: SOMMER, Aron, 30169 Hannover (DE); NGO, Tri Tan, 29223 Celle (DE); OSTERMANN, Jörn, 30655 Hannover (DE)
(74) Vertreter: Kröncke, Rolf
(86) Internationale Anmeldenummer: PCT/EP2018/067205
(87) Internationale Veröffentlichungsnummer: WO 2019/002348

(56) Entgegenhaltungen:
- WO-A1-2016/208661
- DE-A1- 102013 018 753
- DE-A1- 102014 219 113
- DE-A1- 102015 110 619
- DE-B3- 102016 202 052
- AHMED S S ET AL: "Multistatic mm-Wave Imaging with Planar 2D-Arrays", GERMAN MICROWAVE CONFERENCE, 2009, IEEE, PISCATAWAY, NJ, USA, 16 March 2009 (2009-03-16), pages 1 - 4, XP031449765, ISBN: 978-3-9812668-0-1

## Beschreibung

Die Erfindung betrifft eine Nahfeld-Radareinrichtung mit einer Vielzahl einzelner Radarsensoren. Die Erfindung betrifft außerdem ein Land-, Luft- oder Wasser-Fahrzeug mit einer Steuerungseinrichtung zur autonomen Steuerung des Land-, Luft- oder Wasser-Fahrzeuges oder für wenigstens ein Fahrerassistenzsystem des Land-, Luft- oder Wasser-Fahrzeuges, die Verwendung einer derartigen Radareinrichtung sowie ein Verfahren zum Betrieb einer derartigen Radareinrichtung. Die Erfindung betrifft außerdem ein Computerprogramm zur Durchführung des Verfahrens.

Radareinrichtungen spielen eine wesentliche Rolle im Bereich der autonomen Fahrzeugsteuerung. Aus der WO 2017/050 798 A1 ist bekannt, Radarsensoren frontseitig an einem Fahrzeug anzuordnen. Zur Erhöhung der Auflösung wird dabei das Verfahren des Radars mit synthetischer Apertur angewandt (auch synthetic aperture radar genannt, abgekürzt SAR).

Aus der DE 10 2013 018 753 A1 ist eine Radarsensoranordnung zur Umgebungsüberwachung für ein Fahrzeug bekannt. Aus der DE 10 2015 110 619 A1 sind zentralisierte Radarverfahren und -systeme bekannt. Aus der DE 10 2014 219 113 A1 ist eine MIMO-Radarvorrichtung zum entkoppelten Bestimmen eines Elevationswinkels und eines Azimutwinkels eines Objekts und ein Verfahren zum Betreiben einer MIMO-Radarvorrichtung bekannt. Aus der Veröffentlichung Sherif Sayed Ahmed et al., "Multistatic mm-Wave Imgaing with Planar 2D-Arrays", German Microwave Conference, 2009, IEEE, Piscataway, NJ, USA, 16. März 2009, Seiten 1-4 gehen Vorschläge für Radaranwendungen hervor.

Ein Problem bei solchen Nahfeld-Radareinrichtungen besteht darin, dass die erzielte räumliche Auflösung unzureichend ist. Zur Erreichung einer ausreichenden räumlichen Auflösung und damit einer sinnvollen Erfassungsgenauigkeit müssten die einzelnen Radarsensoren eigentlich so nahe beieinander angeordnet sein, z.B. im Abstand von 1 mm zwischen ihren Mittelachsen, dass dies aufgrund der Baugröße der Radarsensoren aus fertigungstechnischen Gründen derzeit und in absehbarer Zukunft nicht umsetzbar erscheint.

Der Erfindung liegt daher die Aufgabe zugrunde, eine mit heutigen Mitteln realisierbare Nahfeld-Radareinrichtung anzugeben, die die für autonome Steuerungsanwendungen von Fahrzeugen erforderlichen Bedingungen, insbesondere hinsichtlich der Auflösung, erfüllt. Ferner soll ein entsprechendes Fahrzeug, die Verwendung einer Radareinrichtung in einem Fahrzeug, ein Verfahren zum Betrieb einer Radareinrichtung sowie ein hierfür geeignetes Computerprogramm angegeben werden.

Diese Aufgabe wird durch eine Nahfeld-Radareinrichtung gemäß Anspruch 1 gelöst. Dies umfasst eine Vielzahl von einzelnen Radarsensoren, die fest in einem Montagebereich der Radareinrichtung verteilt nebeneinander angeordnet sind, wobei die Radarsensoren derart verteilt angeordnet sind, dass sie nicht in einer einzigen geraden Linie nebeneinander angeordnet sind. Die Erfindung hat den Vorteil, dass durch geschickte Anordnung der einzelnen Radarsensoren derart, dass sie nicht in einer einzigen geraden Linie nebeneinander angeordnet sind, auch mit Radarsensoren heutiger Baugröße die eingangs genannte Aufgabe gelöst werden kann und eine Nahfeld-Radareinrichtung für Anwendungen im autonomen Fahren bereitgestellt werden kann, die mit wenig Aufwand und ohne bewegliche Teile realisiert werden kann. Die erfindungsgemäße Radareinrichtung ermöglicht daher insbesondere für Anwendungen im Stadtverkehr eine ausreichend hohe Auflösung.

Die Erfindung erfordert insbesondere keine mechanisch bewegten Radarsensoren, stattdessen können sämtliche Radarsensoren fest an ihrem vorgesehenen Platz im Montagebereich der Radareinrichtung angeordnet sein. Der Montagebereich der Radareinrichtung kann ein ebener oder unebener Bereich sein, und zwar eine Montageplatte oder eine elektrische Leiterplatte. Beispielsweise kann der Montagebereich gewölbt sein, damit mit den Radarsensoren die Umgebung auch seitlich, d.h. links und rechts, erfasst werden kann.

Der Abstand zwischen den einzelnen Radarsensoren, oder genauer gesagt der Abstand zwischen den jeweiligen Mittelpunkten der Antennen benachbarter Radarsensoren kann dabei relativ groß bemessen werden, z.B. ca. 4 cm. Insbesondere kann der Abstand wenigstens 1 mm betragen, insbesondere wenigstens 5 mm oder wenigstens 2 cm oder wenigstens 3 cm. Der Abstand benachbarter Radarsensoren kann auch durch den Abstand zwischen den Mittelachsen der Radarsignal-Abstrahlungskeulen benachbarter Radarsensoren, gemessen an der Antennenoberfläche, charakterisiert werden

Als Nahfeld-Radareinrichtung wird insbesondere eine Radareinrichtung verstanden, die für die Objekterfassung im Bereich von maximal 300 m geeignet ist, oder im Bereich von maximal 100 m, oder im Bereich von maximal 50 m.

Gemäß der Erfindung ist vorgesehen, dass alle der Radarsensoren jeweils eine Sendeantenne und eine Empfangsantenne aufweisen, die auf einer gemeinsamen Baugruppe des Radarsensors angeordnet sind, insbesondere dort fest angeordnet sind. Auf diese Weise können auch bei einer Radareinrichtung, bei der bauartbedingt infolge der Bauweise der einzelnen Radarsensoren die Sendeantennen und Empfangsantennen nicht äquidistant zueinander angeordnet sind, dennoch die erfindungsgemäßen Vorteile realisiert werden. Insbesondere kann mit im Handel erhältlichen Radarsensoren, z.B. Radarsensoren der Firma Innosent, die gewünschte hohe Auflösung trotz der Baugröße der einzelnen Radarsensoren, die diese hohe Auflösung eigentlich nicht zulässt, erreicht werden. Die Sendeantenne und die Empfangsantenne eines solchen Radarsensors können z.B. auf einer gemeinsamen Leiterplatte oder einem gemeinsamen Halbleiterchip angeordnet sein.

Gemäß einer vorteilhaften Weiterbildung der Erfindung ist vorgesehen, dass bei einem, mehreren oder allen der Radarsensoren die Sendeantenne und/oder die Empfangsantenne als Patch-Antenne ausgebildet ist. Dies erlaubt eine effiziente Abstrahlung der Radarsignale sowie einen effizienten Empfang der Radarsignale. Eine solche Patch-Antenne kann dabei beispielsweise aus mehreren Mini-Patches gebildet sein, die miteinander verschaltet sind. Beispielsweise können zwei, drei, vier oder mehr Mini-Patches eine solche Patch-Antenne bilden.

Gemäß einer vorteilhaften Weiterbildung der Erfindung ist vorgesehen, dass die Radarsensoren flächig verteilt und/oder linienförmig in einer oder mehreren Linien verteilt in dem Montagebereich der Radareinrichtung angeordnet sind. Die Radarsensoren können z.B. eine gewisse Fläche des Montagebereiches überdecken, oder nur auf einer oder mehreren Linien verteilt angeordnet sein, d.h. linienförmig angeordnet sein, aber nicht in einer einzigen geraden Linie.

Gemäß der Erfindung ist vorgesehen, dass die Radarsensoren entlang einer geschlossenen linienförmigen Kontur angeordnet sind. Als geschlossene linienförmige Kontur wird dabei jegliche Linienform verstanden, die keinen Anfang und kein Ende aufweist, z.B. eine Kreisform, eine ovale Form (Ellipse), aber auch mehreckige Konturen, die z.B. aus gradlinigen Linienstücken zusammengesetzt sein können. Auf diese Weise kann mit einer vergleichswese geringen Anzahl von Radarsensoren über einen flächigen Bereich, der auch den Innenbereich der von der linienförmigen Kontur umschlossenen Bereich umfasst, eine hohe Auflösung der Radarsignale erzielt wird.

Gemäß einer vorteilhaften Weiterbildung der Erfindung ist vorgesehen, dass die linienförmige Kontur eine Kreisform oder eine ovale Form aufweist. Dies ist insbesondere vorteilhaft für Anwendungen im Bereich des autonomen Fahrens von Straßenfahrzeugen.

Gemäß der Erfindung ist vorgesehen, dass die Radareinrichtung eine elektronische Steuereinheit aufweist, die zum Betreiben der Radarsensoren durch Ansteuern der Radarsensoren und durch Erfassen der von den Radarsensoren aufgenommenen Reflektionssignale eingerichtet ist, wobei die Steuereinrichtung dazu eingerichtet ist, die Radarsensoren als Radar mit synthetischer Apertur zu betreiben. Die elektronische Steuereinheit kann beispielsweise einen Mikroprozessor, Mikrokontroller oder sonstigen Rechner aufweisen, durch den ein Computerprogramm ausgeführt wird, um die Radarsensoren zu betreiben und ein SAR-Verfahren auszuführen. Zum Betreiben der Radarsensoren gehört das Ansteuern der Radarsensoren, so dass diese, in der Regel einzeln nacheinander, Radarsignale abstrahlen. Hierbei ist es zur Vermeidung von Messungenauigkeiten durch den Dopplereffekt vorteilhaft, die Radarsignale in Form von sogenannten "rapid chirps", d.h. schnellen Frequenzvariationen, abzustrahlen.

Die einzelnen Radarsensoren können jeweils sowohl zum Abstrahlen von Radarsignalen als auch zum Empfangen von Reflektionssignalen, die aufgrund von Reflektionen der abgestrahlten Radarsignale empfangen werden, ausgebildet sein. Die Radarsensoren können auch gemischt ausgebildet sein, z.B. derart, dass einer oder mehrere Radarsensoren nur zum Abstrahlen von Radarsignalen eingerichtet sind und einer oder mehrere andere Radarsensoren nur zum Empfangen von Reflektionssignalen eingerichtet sind.

Die Radarsensoren können nach unterschiedlichen Prinzipien betrieben werden, z.B. nach dem MIMO-Prinzip (MIMO - Multiple Input Multiple Output). Bei diesem Prinzip werden von mehreren Radarsensoren gleichzeitig Radarsignale abgestrahlt und von mehreren Radarsensoren die Reflektionssignale aufgenommen.

Gemäß der Erfindung ist vorgesehen, dass die Steuereinheit dazu eingerichtet ist, die Radarsensoren nach dem MIMO-Prinzip oder dem MISO-Prinzip zu betreiben. MISO steht dabei für Multiple Input Single Output, d.h. es wird zu einem jeweiligen Zeitpunkt nur von einem Radarsensor ein Radarsignal abgestrahlt und von mehreren oder allen Radarsensoren die Reflektionssignale empfangen. Hierdurch wird im Vergleich zu dem MIMO-Prinzip der Betrieb der Radareinrichtung sowie die Auswertung der Reflektionssignale vereinfacht, insbesondere werden eventuelle Synchronisationsprobleme zwischen Radarsensoren eliminiert. Die Radareinrichtung kann daher mit weniger Aufwand realisiert werden.

Bei den genannten Prinzipien des Betriebs der Radarsensoren müssen nicht zwangsläufig sämtliche Radarsensoren bei jedem Erfassungsvorgang aktiv sein, es kann auch nur eine Untermenge der vorhandenen Radarsensoren genutzt werden.

Die genutzte Untermenge kann konstant sein oder im Laufe des Betriebs variiert werden.

Gemäß einer vorteilhaften Weiterbildung der Erfindung ist vorgesehen, dass die Steuereinheit dazu eingerichtet ist, die Radarsensoren hinsichtlich des Sendens von Radarsignalen und/oder des Empfangens von Reflektionssignalen mit im Laufe des Betriebs variierenden Einschalt- und Ausschaltmustern zu betreiben. Die variierenden Einschalt- und Ausschaltmuster können nach vorbestimmten Algorithmen bestimmt werden, insbesondere nach dem Zufallsprinzip. Ein solcher Betrieb der Radarsensoren hat den Vorteil, dass besonders effiziente Auswerteverfahren genutzt werden können, z.B. der Compressed-Sensing-Algorithmus.

Gemäß einer vorteilhaften Weiterbildung der Erfindung ist vorgesehen, dass die Steuereinheit dazu eingerichtet ist, aus den von den Radarsensoren empfangenen Reflektionssignalen ein dreidimensionales Abbild der von der Radareinrichtung erfassten Umgebung zu generieren. Dies hat den Vorteil, dass von der Umgebung, anders als bei bekannten Systemen, nicht nur eine linienförmige Information mit Tiefeninformation zur Verfügung steht, sondern ein zweidimensionales Signal mit zusätzlicher Tiefeninformation, somit ein dreidimensionales Abbild der Umgebung. Das dreidimensionale Abbild der Umgebung kann von der Radareinrichtung dann als Datensatz bereitgestellt werden und beispielsweise über eine Schnittstelle an andere Systeme übertragen werden. Dies erlaubt die Umsetzung völlig neuer Steuerungsalgorithmen, insbesondere für Anwendungen des autonomen Fahrens.

Gemäß einer vorteilhaften Weiterbildung der Erfindung ist vorgesehen, dass für die Erzeugung des Abbilds der Umgebung der Global Backprojection Algorithmus eingesetzt ist. Auf diese Weise kann mit vertretbarem Rechenaufwand das gewünschte Abbild der Umgebung bestimmt werden. Der Global Backprojection Algorithmus erzeugt eine Art Datenrückprojektion. Alternativ kann auch der Omega-K-Algorithmus oder der Compressed Sensing Algorithmus eingesetzt werden.

Die eingangs genannte Aufgabe wird ferner gelöst durch ein Land-, Luft- oder Wasser-Fahrzeug mit einer Steuerungseinrichtung zur autonomen Steuerung oder für wenigstens ein Fahrerassistenzsystem des Land-, Luft- oder Wasser-Fahrzeugs, wobei die Steuerungseinrichtung eine Radareinrichtung der zuvor erläuterten Art aufweist. Auch hierdurch können die zuvor erläuterten Vorteile realisiert werden. Das Landfahrzeug kann z.B. ein Straßenfahrzeug sein, z.B. ein Personenkraftwagen oder ein Lastkraftwagen.

Die eingangs genannte Aufgabe wird ferner gelöst durch eine Verwendung einer Radareinrichtung der zuvor erläuterten Art für die autonome Steuerung oder für wenigstens eine Fahrerassistenzfunktion eines Land-, Luft- oder Wasser-Fahrzeuges. Auch hierdurch können die zuvor erläuterten Vorteile realisiert werden.

Die eingangs genannte Aufgabe wird ferner gelöst durch ein Verfahren zum Betrieb einer Radareinrichtung der zuvor erläuterten Art, bei der die Radarsensoren als Radar mit synthetischer Apertur betrieben werden und aus den von den Radarsensoren empfangenen Reflektionssignalen ein zweidimensionales Signal mit zusätzlicher Tiefeninformation und somit ein dreidimensionales Abbild der von der Radareinrichtung erfassten Umgebung generiert wird. Dabei können die Radarsensoren nach dem MIMO-Prinzip oder dem MISO-Prinzip und ggf. mit im Laufe des Betriebs variierenden Einschalt- und Ausschaltmustern betrieben werden. Auch hierdurch können die zuvor erläuterten Vorteile realisiert werden.

Die eingangs genannte Aufgabe wird ferner gelöst durch ein Computerprogramm mit Programmcodemitteln, eingerichtet zur Durchführung eines Verfahrens der zuvor erläuterten Art, wenn das Verfahren durch einen Rechner ausgeführt wird. Das Verfahren kann z.B. durch einen Rechner der Steuereinheit der Radareinrichtung ausgeführt werden. Das Computerprogramm kann auf einem Datenträger gespeichert sein. Auch hierdurch können die zuvor erläuterten Vorteile realisiert werden.

Die Erfindung wird nachfolgend anhand von Ausführungsbeispielen unter Verwendung von Zeichnungen näher erläutert.

Es zeigen:
- Figur 1: - ein Fahrzeug mit einer Radareinrichtung und
- Figur 2: - eine Einrichtung mit einer Radareinrichtung und
- Figuren 3 bis 8: - Radarsensor-Anordnungen und deren korrespondierende synthetische Antennen.

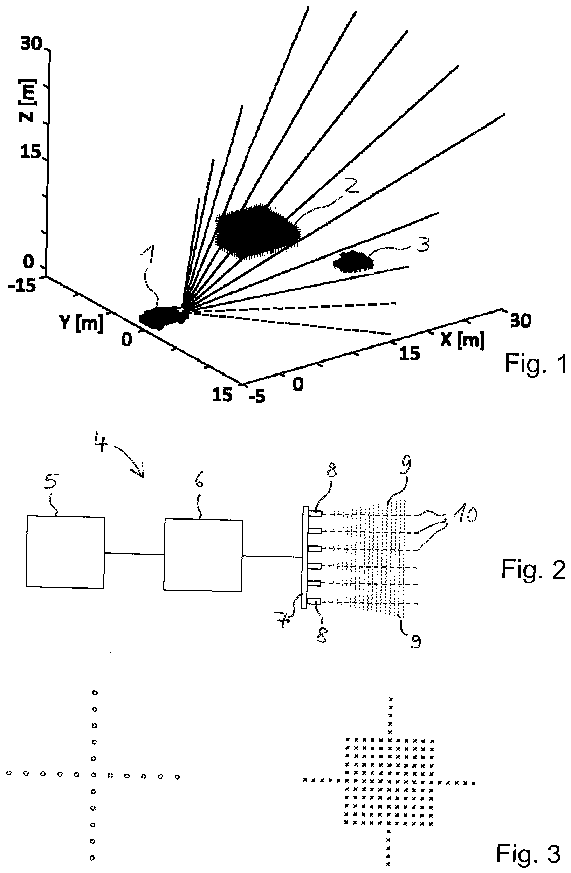

Die Figur 1 zeigt ein Fahrzeug 1, das mit einer Steuerungseinrichtung zur autonomen Steuerung des Fahrzeugs 1 einschließlich einer Radareinrichtung ausgestattet ist. Durch die vom Fahrzeug 1 ausgehenden Strahlen soll beispielhaft das Radar-Erfassungsfeld der Radareinrichtung dargestellt sein. Im Erfassungsfeld befinden sich andere Objekte 2, 3, die durch die Radareinrichtung erfasst werden können. Die Radareinrichtung ist als Nahfeld-Radareinrichtung ausgebildet, die zu erfassenden Objekte 2, 3 befinden sich daher im sogenannten Nahfeld.

Die Figur 2 zeigt eine Steuerungseinrichtung zur autonomen Steuerung eines Land-, Luft- oder Wasser-Fahrzeugs, z.B. des Fahrzeugs 1. Die Steuerungseinrichtung weist eine Radareinrichtung 4 in Form einer Nahfeld-Radareinrichtung auf, die mit einer Fahrzeugsteuereinheit 5 verbunden ist. Die Radareinrichtung 4 weist eine elektronische Steuereinheit 6 sowie eine Vielzahl von Radarsensoren 8 auf, die in einem Montagebereich 7 angeordnet sind, d.h. dort befestigt sind und verteilt nebeneinander angeordnet sind. Die Radarsensoren 8 können Radarsignale abstrahlen, die in der Figur 2 in Form von sich zumindest teilweise überlappenden Radarsignal-Abstrahlungskeulen 9 dargestellt sind. Die Radarsensoren 8 bzw. deren Antennen-Mittelpunkte sind voneinander wenigstens um 1 mm beabstandet, z.B. um 4 cm. Dementsprechend groß ist auch der Abstand zwischen den Mittelachsen 10 der Radarsignal-Abstrahlungskeulen 9, zumindest am Ausgangspunkt an der jeweiligen Radarsensor-Antenne.

Die Mittelachsen 10 können, wie dargestellt, parallel oder im Wesentlichen parallel verlaufen, sie können auch zumindest zum Teil nicht parallel angeordnet sein, z.B. fächerförmig auseinanderlaufen.

Die Steuereinheit 6 ist mit den Radarsensoren 8 verbunden. Die Steuereinheit 6 kann die Radarsensoren ansteuern, so dass Radarsignale abgestrahlt werden. Die aufgrund der abgestrahlten Radarsignale von den Radarsensoren 8 empfangenen Reflektionssignale können von der Steuereinheit 6 aufgenommen werden und ausgewertet werden. Die Umgebungserfassung durch die Radareinrichtung 4 erfolgt grundsätzlich derart, dass von einem oder mehreren Radarsensoren 8 Radarsignale abgestrahlt werden. Von einem oder mehreren Radarsensoren 8 werden Reflektionssignale, die von den Objekten 2, 3 in der Umgebung aufgrund der abgestrahlten Radarsignale reflektiert werden, wieder empfangen. Die abgestrahlten Radarsignale werden beispielsweise als die erwähnten "rapid chirps" abgestrahlt.

Die Steuereinheit 6 steuert die Radarsensoren beispielsweise nach dem MISO-Prinzip an, z.B. derart, dass immer durch jeweils nur einen Radarsensor 8 ein Radarsignal abgegeben wird und von den übrigen Radarsensoren 8 die Reflektionssignale aufgenommen werden oder von sämtlichen Radarsensoren 8 die Reflektionssignale aufgenommen werden. Durch Anwendung eines Verfahrens der synthetischen Apertur wird dann durch eine Art Interpolation auch für Positionen, an denen keine Radarsensoren 8 in dem Montagebereich 7 angeordnet sind, im Sinne synthetischer Antennen dort auftretende Reflektionssignale berechnet (synthetische Reflektionssignale).

Die Steuereinheit 6 wertet die von den Radarsensoren 8 tatsächlich empfangenen Reflektionssignale sowie die synthetischen Reflektionssignale aus und berechnet ein dreidimensionales Abbild der von der Radareinrichtung 4 erfassten Umgebung, z.B. mit dem Global Backprojection Algorithmus. Es ist somit im erstellten dreidimensionalen Abbild für jede zweidimensionale Ebene oder Kugelschale in unterschiedlichen Abständen zum Fahrzeug 1 eine Information über in der Umgebung erfasste Objekte vorhanden, d.h. über die Objekte 2, 3. Es wird somit eine zweidimensionale Umgebungsinformation kombiniert mit einer Tiefeninformation bereitgestellt.

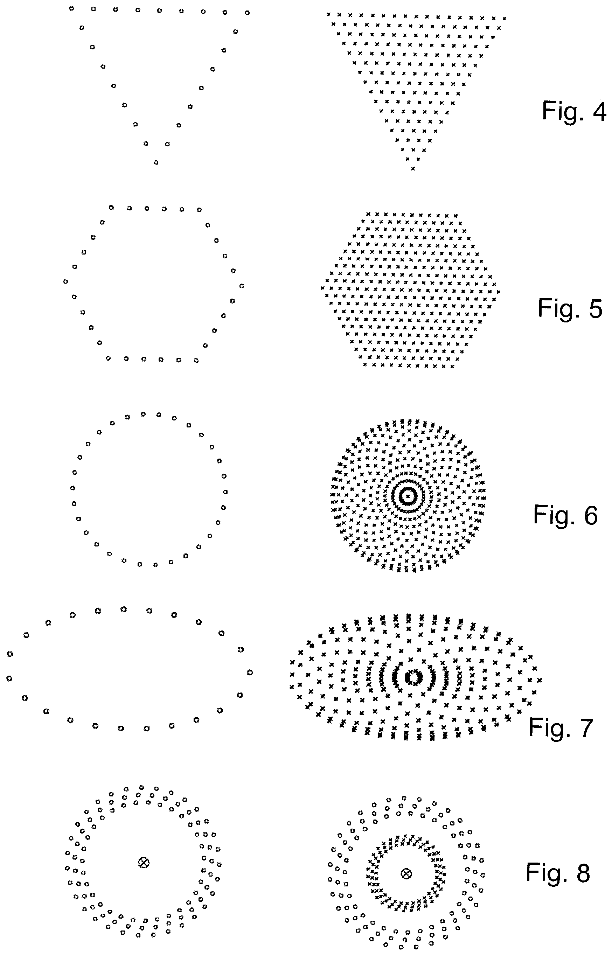

Für die Anordnung der einzelnen Radarsensoren 8 sind verschiedene Konzepte vorteilhaft möglich, was nachfolgend beispielhaft anhand der Figuren 3 bis 8 erläutert werden soll. In den Figuren 3 bis 8 ist in der jeweiligen linken Abbildung die Anordnung der Radarsensoren 8 in dem Montagebereich 7 dargestellt, jeweils in Draufsicht auf den Montagebereich 7. In der jeweiligen rechten Abbildung ist dargestellt, mit welcher Auflösung nach Anwendung des Auswerteverfahrens mit synthetischer Apertur in einer Ebene Umgebungsinformationen der Radarsensoren zur Verfügung stehen. Dementsprechend werden durch Kreise jeweilige Radarsensoren mit realen Antennen gekennzeichnet, durch Kreuze die Erfassungspositionen der realen Antennen in Kombination mit den synthetischen Antennenpositionen, somit sämtliche Erfassungspositionen. Abweichend hiervon sind in der Figur 8 nur die synthetischen Antennenpositionen mit Kreuzen gekennzeichnet.

Die Figur 3 zeigt eine Anordnung der Radarsensoren in zwei sich kreuzenden, insbesondere rechtwinklig kreuzenden, Linien. Die Anordnung der sich kreuzenden Linien kann voll symmetrisch ausgebildet sein. Wie erkennbar ist, kann durch das Verfahren der synthetischen Apertur ein größerer Umgebungsbereich des Kreuzungspunkts der Linien mit erfasst werden, ohne dass dort reale Antennen vorhanden sind.

Bei den Ausführungsformen der Figuren 4 bis 7 sind die Radarsensoren 8 jeweils auf einer einzigen geschlossenen linienförmigen Kontur angeordnet. Bei der Figur 4 ist diese Kontur dreieckförmig, bei der Figur 5 sechseckförmig, bei der Figur 6 kreisförmig und bei der Figur 7 oval (elliptisch). Wie anhand der jeweils rechts dargestellten synthetischen Antennen-Anordnungen erkennbar ist, kann auch bei Einsatz einer relativ geringen Anzahl von Radarsensoren auf der linienförmigen Kontur eine vergleichsweise hohe Auflösung der Radareinrichtung erzielt werden, auch im Innenbereich, der von der linienförmigen Kontur umgeben ist, ohne dass dort tatsächlich reale Antennen vorhanden sind. Versuche haben gezeigt, dass insbesondere die kreisförmige Anordnung gemäß Figur 6 und die elliptische Anordnung gemäß Figur 7 besonders effizient sind, da im Zentralbereich eine besonders hohe Auflösung erzielt wird. Dies ist insbesondere für Anwendungen im Straßenverkehr vorteilhaft. Durch die elliptische Kontur kann insbesondere ein relativ breites Erfassungsfeld mit vergleichsweise geringer Höhe realisiert werden.

Während bei den Darstellungen der Figuren 3 bis 7 davon ausgegangen wurde, dass die Radarsensoren nach dem MISO-Prinzip betrieben werden, wird anhand der Figur 8 eine weitere Möglichkeit des Aufbaus der Radareinrichtung sowie des Betriebs der Radarsensoren erläutert. Es sei in diesem Fall angenommen, dass die Radareinrichtung eine Vielzahl von auf mehreren konzentrischen kreisförmigen Konturen angeordnete Radarsensoren 8 aufweist, die jeweils nur zum Empfangen von Reflektionssignalen betrieben werden. Im Zentrum der Anordnung befindet sich ein zusätzlicher zentraler Radarsensor, der die Radarsignale aussendet.

Dieser zentrale Radarsensor kann ausschließlich zum Senden der Radarsignale betrieben werden, oder alternativ auch zum Empfangen der Reflektionssignale. Die auf den äußeren konzentrischen Kreisen angeordneten Radarsensoren können dabei vergleichsweise klein ausgebildet sein, so dass sich hierdurch aufgrund höherer Packungsdichte auch eine Erhöhung der Auflösung realisieren lässt. Die Figur 8 zeigt in der rechten Darstellung die verfügbaren Antennenpositionen, die sich aus den Positionen der realen Antennen der Radarsensoren (dargestellt durch Kreise) und den Positionen die synthetischen Antennen (dargestellt durch Kreuze) ergeben.

Die äußeren auf konzentrischen kreisförmigen Konturen angeordneten Radarsensoren 8 können auch geometrisch anders angeordnet werden, z.B. auf konzentrischen elliptischen Konturen oder sonstigen linienförmigen oder flächigen Konturen.

Wie aus den Beispielen ersichtlich ist, befinden sich die synthetischen Antennenpositionen jeweils zwischen zwei realen Antennen. Vorteilhaft ist dabei die Anordnung der realen Antennen in einer Form, dass eine möglichst dichte Plattierung hinsichtlich der zur Verfügung stehenden Erfassungspositionen vorhanden ist, d.h. hinsichtlich der Kombination der Erfassungspositionen der realen Antennen sowie der synthetischen Antennenpositionen. Hierfür ist insbesondere eine kreisförmige oder elliptische Anordnung der realen Antennen vorteilhaft, wie die Figuren 6 und 7 zeigen.

## Patentansprüche

1. Nahfeld-Radareinrichtung (4), aufweisend eine Vielzahl von einzelnen Radarsensoren, wobei sämtliche Radarsensoren fest in einem Montagebereich (7) in Form einer Montageplatte oder Leiterplatte der Radareinrichtung (4) verteilt nebeneinander angeordnet sind, wobei alle der Radarsensoren (8) jeweils eine Sendeantenne und eine Empfangsantenne aufweisen, die auf einer gemeinsamen Baugruppe des Radarsensors angeordnet sind, wobei die Radarsensoren (8) derart verteilt angeordnet sind, dass sie nicht in einer einzigen geraden Linie nebeneinander angeordnet sind, wobei die Radareinrichtung (4) eine elektronische Steuereinheit (6) aufweist, die zum Betreiben der Radarsensoren (8) durch Ansteuern der Radarsensoren (8) und durch Erfassen der von den Radarsensoren (8) aufgenommenen Reflektionssignale eingerichtet ist, wobei die Steuereinrichtung (6) dazu eingerichtet ist, die Radarsensoren (8) als Radar mit synthetischer Apertur zu betreiben, wobei die Radarsensoren (8) entlang einer geschlossenen linienförmigen Kontur angeordnet sind, wobei die Steuereinheit (6) dazu eingerichtet ist, die Radarsensoren (8) nach dem MIMO-Prinzip oder dem MISO-Prinzip zu betreiben.

2. Radareinrichtung nach einem der vorhergehenden Ansprüche, **dadurch gekennzeichnet, dass** bei einem, mehreren oder allen der Radarsensoren (8) die Sendeantenne und/oder die Empfangsantenne als Patch-Antenne ausgebildet ist.

3. Radareinrichtung nach einem der vorhergehenden Ansprüche, **dadurch gekennzeichnet, dass** die linienförmige Kontur eine Kreisform oder eine ovale Form aufweist.

4. Radareinrichtung nach einem der vorhergehenden Ansprüche, **dadurch gekennzeichnet, dass** der Abstand zwischen benachbarten Radarsensoren (8) wenigstens 1 mm ist, insbesondere wenigstens 5 mm oder wenigstens 2 cm oder wenigstens 3 cm.

5. Radareinrichtung nach einem der vorhergehenden Ansprüche, **dadurch gekennzeichnet, dass** die Steuereinheit (6) dazu eingerichtet ist, die Radarsensoren (8) mit im Laufe des Betriebs variierenden Einschalt- und Ausschaltmustern zu betreiben.

6. Radareinrichtung nach einem der vorhergehenden Ansprüche, **dadurch gekennzeichnet, dass** die Steuereinheit (6) dazu eingerichtet ist, aus den von den Radarsensoren (8) empfangenen Reflektionssignalen ein dreidimensionales Abbild der von der Radareinrichtung (4) erfassten Umgebung zu generieren.

7. Radareinrichtung nach dem vorhergehenden Anspruch, **dadurch gekennzeichnet, dass** für die Erzeugung des Abbilds der Umgebung der Global Backprojection Algorithmus eingesetzt ist.

8. Land-, Luft- oder Wasser-Fahrzeug (1) mit einer Steuerungseinrichtung (4, 5) zur autonomen Steuerung oder für wenigstens ein Fahrerassistenzsystem des Land-, Luft- oder Wasser-Fahrzeugs, **dadurch gekennzeichnet, dass** die Steuerungseinrichtung (4, 5) eine Radareinrichtung (4) nach einem der vorhergehenden Ansprüche aufweist.

9. Verwendung einer Radareinrichtung (4) nach einem der Ansprüche 1 bis 7 für die autonome Steuerung oder für wenigstens eine Fahrerassistenzfunktion eines Land-, Luft- oder Wasser-Fahrzeugs (1).

10. Verfahren zum Betrieb einer Radareinrichtung (4) nach einem der Ansprüche 1 bis 7, **dadurch gekennzeichnet, dass** die Radarsensoren (8) als Radar mit synthetischer Apertur betrieben werden und aus den von den Radarsensoren (8) empfangenen Reflektionssignalen ein zweidimensionales Signal mit zusätzlicher Tiefeninformation und somit ein dreidimensionales Abbild der von der Radareinrichtung (4) erfassten Umgebung generiert wird.

11. Computerprogramm mit Programmcodemitteln, eingerichtet zur Durchführung eines Verfahrens nach dem vorhergehenden Anspruch, wenn das Verfahren durch einen Rechner ausgeführt wird.

## Claims

1. A near-field radar device (4) comprising a plurality of individual radar sensors, wherein all the radar sensors are fixedly arranged side by side in a mounting area (7) in the form of a mounting plate or printed circuit board of the radar device (4), wherein all the radar sensors (8) each have a transmitting antenna and a receiving antenna which are arranged on a common assembly of the radar sensor, wherein the radar sensors (8) are arranged in a distributed manner such that they are not arranged side by side in a single straight line, the radar device (4) having an electronic control unit (6) which is set up to operate the radar sensors (8) by actuating the radar sensors (8) and by detecting the reflection signals picked up by the radar sensors (8), the control unit (6) being set up for this purpose, to operate the radar sensors (8) as synthetic aperture radar, wherein the radar sensors (8) are arranged along a closed linear contour, wherein the control unit (6) is set up to operate the radar sensors (8) according to the MIMO principle or the MISO principle.

2. Radar device according to one of the preceding claims, **characterized in that** the transmitting antenna and/or the receiving antenna of one, several or all of the radar sensors (8) is designed as a patch antenna.

3. Radar device according to one of the preceding claims, **characterized in that** the linear contour has a circular shape or an oval shape.

4. Radar device according to one of the preceding claims, **characterized in that** the distance between adjacent radar sensors (8) is at least 1 mm, in particular at least 5 mm or at least 2 cm or at least 3 cm.

5. Radar device according to one of the preceding claims, **characterized in that** the control unit (6) is set up to operate the radar sensors (8) with switch-on and switch-off patterns that vary in the course of operation.

6. Radar device according to one of the preceding claims, **characterized in that** the control unit (6) is set up to generate a three-dimensional image of the environment detected by the radar device (4) from the reflection signals received from the radar sensors (8).

7. Radar device according to the preceding claim, **characterized in that** the global backprojection algorithm is used to generate the image of the environment.

8. Land, air or water vehicle (1) with a control device (4, 5) for autonomous control or for at least one driver assistance system of the land, air or water vehicle, **characterized in that** the control device (4, 5) has a radar device (4) according to one of the preceding claims.

9. Use of a radar device (4) according to one of claims 1 to 7 for autonomous control or for at least one driver assistance function of a land, air or water vehicle (1).

10. Method for operating a radar device (4) according to one of claims 1 to 7, **characterized in that** the radar sensors (8) are operated as synthetic aperture radar and a two-dimensional signal with additional depth information and thus a three-dimensional image of the environment detected by the radar device (4) is generated from the reflection signals received by the radar sensors (8).

11. A computer program comprising program code means adapted to carry out a method according to the preceding claim when the method is carried out by a computer.

## Revendications

1. Dispositif radar à champ proche (4), comprenant une pluralité de capteurs radar individuels, tous les capteurs radar étant disposés en répartition les uns à côté des autres de manière fixe dans une zone de montage (7) sous la forme d'une plaque de montage ou d'une carte de circuit imprimé du dispositif radar (4), tous les capteurs radar (8) présentant chacun une antenne d'émission et une antenne de réception qui sont disposées sur un module commun du capteur radar, les capteurs radar (8) étant disposés en répartition de manière à ne pas se trouver les uns à côté des autres en une seule ligne droite, le dispositif radar (4) comprenant une unité de commande électronique (6) qui est conçue pour faire fonctionner les capteurs radar (8) en commandant les capteurs radar (8) et en détectant les signaux de réflexion enregistrés par les capteurs radar (8), le dispositif de commande (6) étant conçu pour faire fonctionner les capteurs radar (8) comme un radar à ouverture synthétique, les capteurs radar (8) étant disposés le long d'un contour linéaire fermé, l'unité de commande (6) étant conçue pour faire fonctionner les capteurs radar (8) selon le principe MIMO ou le principe MISO.

2. Dispositif radar selon la revendication précédente,
**caractérisé en ce que** pour un, plusieurs ou tous les capteurs radar (8), l'antenne d'émission et/ou l'antenne de réception est conçue comme une antenne patch.

3. Dispositif radar selon l'une des revendications précédentes,
**caractérisé en ce que** le contour linéaire présente une forme circulaire ou une forme ovale.

4. Dispositif radar selon l'une des revendications précédentes,
**caractérisé en ce que** la distance entre des capteurs radar (8) voisins est d'au moins 1 mm, en particulier d'au moins 5 mm ou d'au moins 2 cm ou d'au moins 3 cm.

5. Dispositif radar selon l'une des revendications précédentes,
**caractérisé en ce que** l'unité de commande (6) est conçue pour faire fonctionner les capteurs radar (8) avec des modèles d'activation et de désactivation qui varient au cours du fonctionnement.

6. Dispositif radar selon l'une des revendications précédentes,
**caractérisé en ce que** l'unité de commande (6) est conçue pour générer une image tridimensionnelle de l'environnement détecté par le dispositif radar (4) à partir des signaux de réflexion reçus par les capteurs radar (8).

7. Dispositif radar selon la revendication précédente,
**caractérisé en ce que** l'algorithme de rétroprojection globale est utilisé pour la génération de l'image de l'environnement.

8. Véhicule terrestre, aérien ou maritime (1) comprenant un dispositif de commande (4, 5) pour la commande autonome ou pour au moins un système d'assistance au conducteur du véhicule terrestre, aérien ou maritime,
**caractérisé en ce que** le dispositif de commande (4, 5) comprend un dispositif radar (4) selon l'une des revendications précédentes.

9. Utilisation d'un dispositif radar (4) selon l'une des revendications 1 à 7 pour la commande autonome ou pour au moins une fonction d'assistance au conducteur d'un véhicule terrestre, aérien ou maritime (1).

10. Procédé de fonctionnement d'un dispositif radar (4) selon l'une des revendications 1 à 7,
**caractérisé en ce que** les capteurs radar (8) fonctionnent comme un radar à ouverture synthétique et **en ce qu'**un signal bidimensionnel avec une information de profondeur supplémentaire et donc une image tridimensionnelle de l'environnement détecté par le dispositif radar (4) est généré à partir des signaux de réflexion reçus par les capteurs radar (8).

11. Programme informatique comprenant des moyens de code de programme, conçu pour mettre en œuvre un procédé selon la revendication précédente, lorsque le procédé est exécuté par un ordinateur.
